# EUROPÄISCHE PATENTSCHRIFT

(11) **EP 0 639 167 B1**
(45) Veröffentlichungstag und Bekanntmachung des Hinweises auf die Patenterteilung: **13.08.1997**
(21) Anmeldenummer: 93909935.4
(22) Anmeldetag: 10.05.1993
(51) Int. Cl.: C05F 17/02, C12M 1/04

(54) **KOMPOSTIERANLAGE MIT MEHREREN SEPARATEN REAKTOREN UND EINER ZENTRALEN BELÜFTUNGSEINRICHTUNG**
COMPOSTING DEVICE WITH SEVERAL SEPARATE REACTORS AND ONE CENTRAL VENTILATION DEVICE
DISPOSITIF DE COMPOSTAGE COMPRENANT PLUSIEURS REACTEURS SEPARES ET UN DISPOSITIF D'AERATION CENTRAL

(30) Priorität: 09.05.1992 DE 4215267
(43) Veröffentlichungstag der Anmeldung: 22.02.1995
(73) Patentinhaber: Grabbe, Klaus, Dr., D-38116 Braunschweig (DE)
(72) Erfinder: GRABBE, Klaus, D-3300 Braunschweig (DE); SCHAAR, Lothar, D-3061 Heuer en (DE)
(74) Vertreter: von Samson-Himmelstjerna, Friedrich R., Dipl.-Phys.
(86) Internationale Anmeldenummer: EP9301143
(87) Internationale Veröffentlichungsnummer: WO9323351

(56) Entgegenhaltungen:
- EP-A- 0 149 444
- EP-A- 0 413 992

## Beschreibung

Die Erfindung bezieht sich auf eine Kompostierungsanlage mit mehreren separaten Reaktoren und einer zentralen Belüftungseinrichtung.

Bei der Rotte biogener organischer Stoffgemenge unter aeroben Bedingungen entstehen Wärme und Stoffwechselgase, die über Belüftungssysteme abgeführt werden müssen. Stand der Technik ist, daß Rottegemenge von Frischluft durchströmt werden und die korrespondierende Abluft ausgeblasen wird. Diese Methode gestattet es nicht, auf die Rottevorgänge definiert Einfluß zu nehmen, da mit der Frischluftzufuhr unkontrolliert Sauerstoff zugeführt und mit der Abluft Feuchtigkeit und Wärme ausgetragen werden. Es bilden sich Gas-, Feuchtigkeits- und/oder Temperatur-Gradienten aus, die aufgrund der vernetzten Parameter nur zur Beschreibung des Prozesses taugen.

Die EP-A-413 992 beschreibt eine Vorrichtung zur Kompostierung von organischen Stoffen, die einen geschlossenen Fermentationsbehälter zur Aufnahme der zu verarbeitenden organischen Stoffe, eine Frischluftzuführung und eine Abluftabführung und Wärmeaustauscher aufweist, in denen die Wärme der Abluft an die Frischluft abgegeben werden kann. Hinter einem ersten Wärmeaustauscher ist ein zweiter Wärmeaustauscher in Frischluftströmungsrichtung in Reihe geschaltet. In der Abluftabführung ist ein Stromteiler zur Teilung des Abluftstroms in mindestens zwei Teilströme vorgesehen, wobei jedem Wärmeaustauscher ein Abluft-Teilstrom zugeführt werden kann. Mit dieser Vorrichtung sollen die Stoffwechselbedingungen für die Kompostierung verbessert werden.

Die EP-A-149 444 beschreibt eine Einrichtung zur Belüftung von Rottegut, mit der die Belüftung dem jeweiligen Rottezustand in verschiedenen Rottezellen angepaßt werden kann. Hierzu werden an die Abscheidekammern der Rottezellen mit Druckmedium beaufschlagte Injektordüsen mit ihrer Saugseite angeschlossen. Zwischen den Rottezellen und der Saugseite der Injektoren sind Absperrventile oder -klappen angeordnet, die es ermöglichen sollen, einzelne Rottezellen ohne Beeinflußung benachbarter Rottezellen zu belüften.

Die konventionellen Belüftungssysteme haben den Nachteil, daß wichtige Verfahrensziele nicht erreicht werden. So ist ein Wasseraustrag erwünscht, doch wird damit gleichzeitig auch Wärme unkontrolliert abgeführt, so daß einerseits erwünschte Feuchtegehalte nicht eingehalten und andererseits wichtige Temperaturvorgaben für die Entwicklung mesophiler und thermophiler Mikrofloren nicht angesteuert werden können. Auch muß darauf verzichtet werden, über einen definierten Sauerstoffeintrag Einfluß auf den mikrobiellen Stoffumsatz zu nehmen. Die Mängel der derzeitigen Prozeßführungen zeigen sich an der Ausbildung zu hoher Temperaturplateaus, an der fortschreitenden Trockenstabilisierung des Rottegutes und an einem unbefriedigenden Stoffumsatz. Hinzu kommen der Austrag von Geruchsstoffen und der Kondensatanfall, die zusätzliche Behandlungseinrichtungen erforderlich machen. Daraus leiten sich bekannte Nachteile für das Produkt Kompost ab, nämlich die unbefriedigende Ausnutzung der Leistungspotentiale spezieller Mikrofloren, die zwangsläufig sich ergebende schlechte Reproduzierbarkeit angestrebter Qualitäten im Sinne der Güterichtlinien für Komposte und bedenkliche Nischenbildungen für Schadfloren in Komposten und seinen Folgeprodukten. Das Risiko möglicher Schadwirkungen bei der diversifizierten Verwendung ist nicht kalkulierbar und vor dem Hintergrund der Produkthaftpflicht unzumutbar.

Die grundsätzlichen Mängel konventioneller Rottesysteme werden auch nicht dadurch behoben, wenn an eine zentrale Luftaufbereitung separate Reaktoren angeschlossen werden. Der Vorteil besteht lediglich darin, daß vorgewärmte Frischluft allen Reaktoren zur Verfügung steht und in diese mit zentral vorgegebenen Strömungsparametern eingeblasen wird. Die befrachtete Abluft wird gesammelt und über einen zentralen Biofilter ausgeblasen. Da die Reaktoren, deren Inhalte unterschiedliche Rottegrade aufweisen, mit identischer Luftqualität und gleichen Luftmengen versorgt werden, ist einleuchtend, daß die Schlüsselparameter der biologischen Prozeßführung, nämlich die Sauerstoffversorgung, Temperatur und Feuchte, nur ungenügend angesteuert werden können.

Die Erfindung stellt darauf ab, die mit den konventionellen Rottesystemen einhergehenden Probleme zu umgehen.

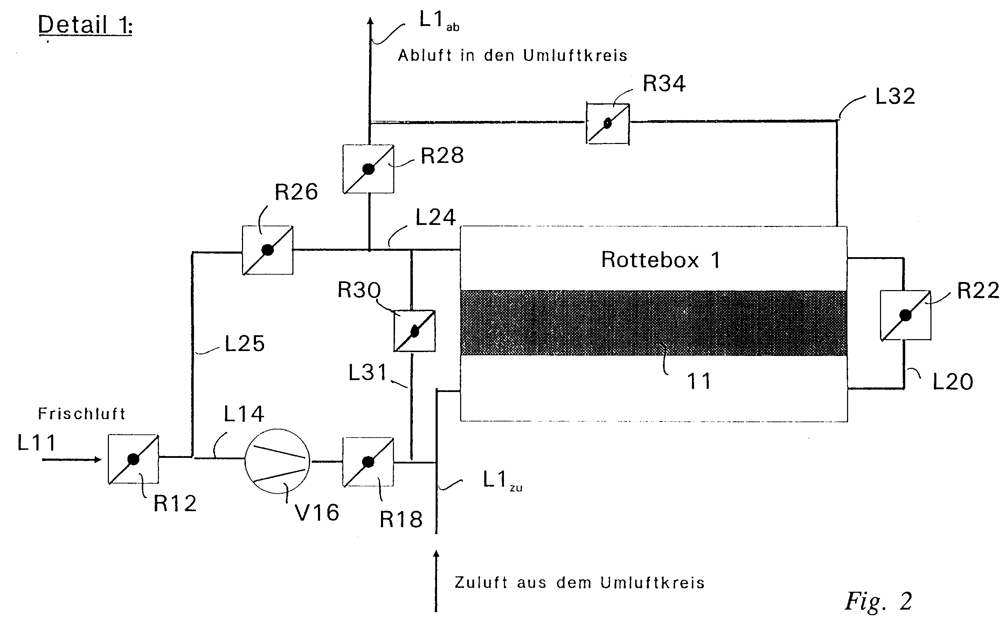

Sie löst dieses Problem durch den Gegenstand des Patentanspruches 1, also durch eine Kompostierungsanlage mit
a) einer zentralen Belüftungseinrichtung (10, K1, 12, K2, K3, 14), die als geregeltes Umluftsystem ausgebildet ist;
b) mehreren separaten Reaktoren (1, 2 ... N), welche an die zentrale Belüftungseinrichtung (10, K1, 12, K2, K3, 14) individuell ankoppelbar (L1_{zu}, R1_{zu}, L1_{ab}; L2_{zu}, R2_{zu}, L2_{ab}; LN_{zu}, RN_{zu}, LN_{ab}) sind; und
c) Mitteln (Fig. 2), welche zur pro Reaktor (1, 2 ... N) unabhängigen und individuellen Einstellbarkeit der den mikrobiellen Stoffumsatz bestimmenden Prozeßparameter ausgelegt sind und hierzu
c.1) eine steuerbare, als Bypass (K3, 14; L20, R22; L32, R34, R28; L24, R30, L31; R26, L25, L14, V16, R18) und/oder der reaktoreigenen Umluftführung (L20, R22, L32, R34, R28, L24, R30, L31; R26, L25, L14, V16, R18) dienende Umleitungsschleife aufweisen.

Die erfindungsgemäße Lösung bietet in ihrer Umluftausführung den Vorteil, zunächst eine Basiskondizionierung der zirkulierenden Umluft unabhängig vom Volumen unter Frischlufteinspeisung vornehmen zu können. Letztere dient nunmehr der Einstellung eines gewünschten Sauerstoffgehaltes. Die Prozeßparameter der angeschlossenen Reaktoren werden fein abgestimmt, und zwar individuell und unabhängig voneinander auf die in jedem Reaktor einzeln gewünschten Prozeßbedingungen unter Berücksichtigung der dortigen Prozeßverhältnisse.

Bevorzugt weisen die angeschlossenen Reaktoren Mittel zur individuellen und bedarfsgerechten Einstellung der Temperatur, der Feuchtigkeit und oder der Gaszusammensetzung der Prozeßluft als Teilstrom der Umluft für jeden Reaktor auf. Nach einem weiteren bevorzugten Ausführungsbeispiel hat jeder angeschlossene Reaktor ein eigenes Umluftsystem, das an das zentrale Umluftsystem anschließbar ist.

Weitere bevorzugte Ausführungsbeispiele ergeben sich aus den dem Patentanspruch 1 folgenden Patentansprüchen, deren Inhalt hiermit ausdrücklich auch zum Inhalt der vorliegenden Beschreibung erklärt wird.

Die angeschlossenen Reaktoren können unabhängig voneinander beispielsweise wie folgt betrieben werden:
1. Die angeschlossenen Reaktoren besitzen eine Einrichtung zu Nachkonditionierung über Heiz- und Befeuchtungsregister für die Luftmengen, die intern das Rottegut durchströmen. Bei einem entsprechenden Luftmengendurchsatz wird sichergestellt, daß das Raumklima mit dem Gemengeklima identisch ist. Die Abluft wird der zentralen Umluft zugeführt und wieder integriert. Überschußluft wird über Biofilter abgegeben. Bei dieser Prozeßführung sollte die zentrale Umluft sauerstoffarm gefahren werden. Die Reaktoren besitzen eine eigene Frischlufteinspeisung.
2. Die angeschlossenen Reaktoren besitzen zusätzlich oder anstelle der Nachkonditionierung über Heiz- und Befeuchtungsregister ein eigenes Umluftsystem, dessen Strömungsparameter separat und individuell einstellbar sind. Das gewünschte Klima im Reaktor stellt sich innerhalb kürzester Zeit ein und kann über Luftteilströme aus der zentralen Luftaufbereitung stabilisiert werden. Der gewünschte Sauerstoffeintrag kann über die eingespeiste Umluft und/oder die separate Frischlufteinspeisung erfolgen. Korrespondierende Abluftmengen werden in die zentrale Umluft integriert. Überschüssige Luftmengen werden über einen zentralen Biofilter abgegeben.
3. Schließlich können die einzelnen Reaktoren auch untereinander verbunden werden, etwa für einen Wärmeaustausch oder aber eine Nutzung der am weitesten fortgeschrittenen Rotte als Biofilter der noch am wenigsten umgesetzten Rotte, also der frischesten Miete.

Die Grundaufbereitung der Umluft läßt sich auf die Bandbreite der Bedürfnisse von Reaktoren unterschiedlich gerotteten Inhaltes umso leichter zuschneiden, je identischer die Zusammensetzung der jeweiligen Ausgangsgemenge in den Reaktoren ist. Hier kommt es auf die Einhaltung erarbeiteter Rezepturen an. Die separate Umluftführung, auch interne Umluftführung genannt, gestattet die Einstellung von Strömungsparametern, welche die biologischen Aktivitäten des jeweiligen Reaktorgemenges in die gewünschten Bahnen lenken. Dies gilt z.B. für den Aufbau des Temperaturplateaus bei der Hygienisierung, für den Abbau von Temperaturspitzen, die Vermeidung von Wärmestaus oder die Führung von Temperaturprofilen. Mit der internen Umluftführung wird außerdem erreicht, daß Geruchsstoffe über das reaktoreigene Rottegemenge als interne Biofilter abgebaut werden. Dies entlastet das zentrale Umluftsystem und den ihm angeschlossenen externen Biofilter.

Das beschriebene Rottesystem für die Aufbereitung biogener Reststoffe zeichnet sich insgesamt dadurch aus, daß ein zentrales Umluftsystem konditionierte Luft führt, die in zugeschaltete Reaktoren individuell eingespeist wird. Die eingespeiste Luft wird bevorzugt nachkonditioniert. Der Vorteil des Rottesystems besteht in der gezielten Beeinflussung des mikrobiellen Stoffumsatzes, um Prozeßziele, z.B. Hygienisierung, Abbau von Geruchsstoffen, temperatur- und feuchtigkeitsabhängige Stoffumsatzleistungen der Mikrofloren definiert ansteuern und individuell regeln zu können.

Nachstehend wird die Erfindung anhand von Ausführungsbeispielen und den beigefügten schematischen Zeichnungen noch näher erläutert. In den Zeichnungen zeigen:
- Fig. 1: ein Strömungsschema der gesamten Kompostierungsanlage; und
- Fig. 2: ein einem einzelnen Reaktor individuell zugeordnetes Strömungsschema.

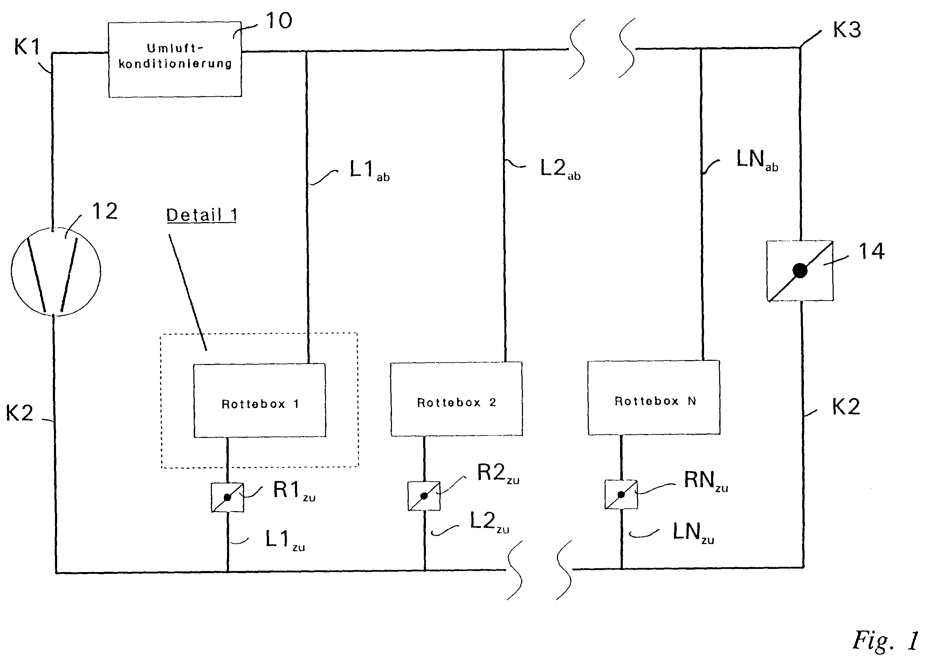

Gemäß Fig. 1 weist die Kompostierungsanlage mehrere separate Reaktoren, Rotteboxen 1, 2, N auf, die jeweils über Zu- und Ableitungen L1_{zu}, L1_{ab}, L2_{zu}, L2_{ab}, LN_{zu}, LN_{ab} mit einer zentralen Belüftungseinrichtung verbunden sind. Die zentrale Belüftungseinrichtung weist eine Umluftkonditionierung 10 auf, die über einen Kanal K1 mit einem Hauptventilator 12 verbunden ist. Der Hauptventilator 12 ist über einen Kanal K2 mit einem steuerbaren Hauptregelventil 14 verbunden. Das Hauptregelventil 14 schließlich ist über einen Kanal K3 wieder mit der Umluftkonditionierung 10 verbunden. Die Umluftkondionierung 10, der Hauptventilator 12 und das Hauptregelventil 14 sind seriell hintereinandergeschaltet. Gemeinsam bilden diese Einrichtungen mit den Kanälen K1 bis K3 eine Umluftschleife.

Die Leitungen L1_{zu} bis LN_{zu} zweigen vom Kanal K2 ab und führen zu den jeweiligen Rotteboxen 1, 2, N. Die Leitungen L1_{ab} bis LN_{ab} verbinden die Rotteboxen 1, 2, N mit dem Kanal K3. Jede der Leitungen L1_{zu} bis LN_{zu} enthält ein steuerbares Regelventil R1_{zu}, R2_{zu} bzw. RN_{zu}. Somit bilden auch die Umluftkonditionierung 10, der Kanal K1, der Hauptventilator 12, der Kanal K2 und jede der Zu- und Ableitungen L1 bis LN zusammen mit der jeweiligen Rottebox 1, 2...N eine Zweigschleife.

Fig. 2 zeigt stellvertretend für alle Rotteboxen die Rottebox 1 mit individuell zugehörigem Luftführungssystem. Die Miete in Rottebox 1 hat das Bezugszeichen 11.

Das individuelle Umluftsystem für die Rottebox 1 weist eine Frischluftzufuhrleitung L11 auf, die Frischluft über ein Regelventil R12 zuführt. Die Leitung L11 teilt sich nach dem Regelventil R12 in eine Zweigleitung L14 mit eingebautem Ventilator V16 und nachgeschaltetem Regelventil R18. Die Leitung L14 führt in die Zufuhrleitung L1_{zu}, die unterhalb der Miete 11 in die Rottebox 1 mündet. Eine Leitung L20 verbindet über ein Regelventil R22 die Räume unterhalb und oberhalb der Miete 11, und zwar auf dem der Zuführleitung L1_{zu} gegenüberliegenden Ende der Rottebox 1. An dem der Leitung L20 gegenüberliegenden Ende der Rottebox 1, also dem gleichen Ende, in das die Zufuhrleitung L1_{zu} einmündet, führt eine Leitung L24 aus dem Raum oberhalb der Miete 11 aus der Rottebox 1 heraus. Diese Leitung L24 ist über ein weiteres regelbares Ventil R26 und eine Leitung L 25 zur Leitung L14 zurückgeführt, und zwar an einen Punkt zwischen dem Regelventil R12 und dem Ventilator V16. Die eben beschriebenen Verbindungen stellen eine erste Umluftschleife für die Rottebox 1 dar.

Die Leitung L24 zweigt zwischen der Rottebox 1 und dem Regelventil R26 in die Leitung L1_{ab} ab, und zwar über ein weiteres Regelventil R28. Zusätzlich sind die Leitungen L14 und L24 über ein weiteres Regelventil R30 und eine Leitung L31 miteinander verbunden, und zwar unmittelbar vor der Rottebox 1. Eine weitere Leitung L32 verbindet über ein weiteres Regelventil R34 den Raum oberhalb der Miete 11 mit der Abluftleitung L1_{ab}. Die Leitung L32 geht von demjenigen Ende der Rottebox 1 aus, das der die Räume oberhalb und unterhalb der Miete 11 verbindenden Leitung L20 unmittelbar benachbart ist. Sie mündet in die Leitung L1_{ab} hinter dem Regelventil R28.

Diese Art der Luftführung ermöglicht wahlweise eine Überströmung, eine Umströmung und/oder eine Durchströmung der Miete 11, und zwar grundsätzlich in der gleichen Weise, wie in der am gleichen Tage eingereichten parallelen PCT-Anmeldung desselben Anmelders bzw. Erfinders, die im übrigen in der deutschen Patentanmeldung P 42 15 269.0-41 ausführlich beschrieben ist. Auf dieses Dokument wird hiermit ausdrücklich Bezug genommen. Es wird insoweit in den Beschreibungstext der vorliegenden Anmeldung inkorporiert.

## Patentansprüche

1. Kompostierungsanlage mit
a) einer zentralen Belüftungseinrichtung (10, K1, 12, K2, K3, 14), die als geregeltes Umluftsystem ausgebildet ist;
b) mehreren separaten Reaktoren (1, 2 ... N), welche an die zentrale Belüftungseinrichtung (10, K1, 12, K2, K3, 14) individuell ankoppelbar (L1_{zu}, R1_{zu}, L1_{ab}; L2_{zu}, R2_{zu}, L2_{ab}; LN_{zu}, RN_{zu}, LN_{ab}) sind; und
c) Mitteln (Fig. 2), welche zur pro Reaktor (1, 2 ... N) unabhängigen und individuellen Einstellbarkeit der den mikrobiellen Stoffumsatz bestimmenden Prozeßparameter ausgelegt sind und hierzu
c.1) eine steuerbare, als Bypass (K3, 14; L20, R22; L32, R34, R28 ; L24, R30, L31; R26, L25, L14, V16, R18) und/oder der reaktoreigenen Umluftführung (L20, R22, L32, R34, R28, L24, R30, L31; R26, L25, L14, V16, R18) dienende Umleitungsschleife aufweisen.

2. Kompostierungsanlage nach Anspruch 1, bei welcher das zentrale Belüftungssystem (10, K1, 12, K2, K3, 14) eine Umluftkonditionierung (10) zur Konditionierung der Temperatur, Feuchtigkeit und/oder Gaszusammensetzung aufweist.

3. Kompostierungsanlage nach Anspruch 2, bei welcher die Umluftkonditionierung (10) Mittel zur Kondensatabscheidung, Wärmerückgewinnung, Filterung für Geruchsstoffe und/oder Waschen für luftgetragene Problemstoffe aufweist.

4. Kompostierungsanlage nach einem der vorstehenden Ansprüche mit Leitungen (L1, L2, LN) zur Zu- und Abführung von Teilströmen aus der in die zentrale(n) Umluft zu von den separaten Reaktoren (1, 2...N).

5. Kompostierungsanlage nach einem der vorstehenden Ansprüche, mit Stellmitteln zur individuellen und bedarfsgerechten Einstellung der Temperatur, Feuchtigkeit und/oder Gaszusammensetzung der Prozeßluft als Teilstrom der Umluft pro Reaktor (1,2...N).

6. Kompostierungsanlage nach einem der vorstehenden Ansprüche, mit einem für wenigstens einen oder mehreren, vorzugsweise allen Reaktoren (1, 2...N) eigenen Umluftsystem (Fig. 2), das mit dem zentralen Umluftsystem (10, K1, 12, K2, K3, 14) wahlweise, vorzugsweise über Regelventile (R1 bis RN) verbindbar ist.

7. Kompostierungsan[age nach einem der vorstehenden Ansprüche, bei welcher die Reaktoren (1 bis N) jeweils über eine eigene regelbare Frischlufteinspeisung (L11, R12) verfügen.

8. Kompostierungsanlage nach einem der vorstehenden Ansprüche, bei welcher die mit dem Frischlufteintrag korrespondierenden Abluftmengen über das zentrale Umluftsystem (10, K1, 12, K2, K3, 14) abführbar sind.

9. Kompostierungsanlage nach einem der vorstehenden Ansprüche, mit Steuermitteln, welche die Teilströme aller angeschlossenen bzw. anschließbaren Reaktoren (1, 2...N) in einem Verhältnis zum Gesamtvolumen der zentralen Luftaufbereitung derart steuern, daß eine problemlose Konditionierung der Umluft gewährleistet ist.

10. Kompostierungsanlage nach einem der vorstehenden Ansprüche, bei welcher die die prozeßbestimmenden Parameter steuernden Einheiten, insbesondere die Umluftkonditionierung (10), sämtliche Ventilatoren und Regelventile manuell oder rechnergestützt ansteuerbar sind.

## Claims

1. Composting plant having
a) a central ventilation device (10, K1, 12, K2, K3, 14) which is constructed as a regulated air circulating system;
b) a plurality of separate reactors (1, 2, ... N) which can be individually connected (L1_{zu}, R1_{zu}, L1_{ab}; L2_{zu}, R2_{zu}, L_{2ab}; LN_{zu}, RN_{zu}, LN_{ab}) to the central ventilation device (10, K1, 12, K2, K3, 14); and
c) means (Fig. 2) which are designed for the independent and individual adjustability per reactor (1, 2, ... N) of the process parameters determining the microbial metabolic rate and for this purpose
c1)a controllable diversion loop serving as bypass (K3, 14; L20, R22; L32, R34, R28; L24, R30, L31; R26, L25, L14, V16, R18) and/or the reactor's own circulating air conduction (L20, R22, L32, R34, R28, L24, R30, L31; R26, L25, L14, V16, R18).

2. Composting plant according to claim 1, in which the central ventilation system (10, K1, 12, K2, K3, 14) has a circulating air conditioning system (10) for conditioning the temperature, humidity and/or gas composition.

3. Composting plant according to claim 2, in which the circulating air conditioning (10) has means for condensate separation, heat recovery, filtering for odoriferous substances and/or washing for airborne hazardous materials.

4. Composting plant according to one of the preceding claims with pipes (L1, L2, LN) for the infeed and discharge of partial flows from/into the central circulating air to/from the separate reactors (1, 2, ... N).

5. Composting plant according to one of the preceding claims, having set-up means for the individual setting in keeping with requirements of the temperature, humidity and/or gas composition of the process air as a partial stream of the circulating air per reactor (1, 2, ... N).

6. Composting plant according to one of the preceding claims having a separate air circulating system (Fig 2) for at least one or more, preferably all, reactors (1, 2, ... N) which can be connected optionally, preferably through regulating valves (R1 to RN), to the central air circulating system (10, K1, 12, K2, K3, 14).

7. Composting plant according to one of the preceding claims, in which the reactors (1 to N) are each equipped with a separate, controllable fresh air infeed (L11, R12).

8. Composting plant according to one of the preceding claims, in which the volumes of exhaust air corresponding to the fresh air infeed can be led off through the central air circulating system (10, K1, 12, K2, K3, 14).

9. Composting plant according to one of the preceding claims, having control means which control the partial streams of all connected or connectable reactors (1, 2, ... N) in a relationship to the total volume of the central air treatment system in such a way that unproblematic conditioning of the circulating air is guaranteed.

10. Composting plant according to one of the preceding claims, in which the units controlling the determining parameters of the process, especially the circulating air conditioning system (10), all ventilators and regulating valves, can be controlled manually or with computer assistance.

## Revendications

1. Installation de production de compost comprenant
a) un dispositif d'aération central (10, K1, 12, K2, K3, 14) qui est réalisé sous la forme d'un système de circulation d'air réglé ;
b) plusieurs réacteurs séparés (1, 2 ... N) qui peuvent être raccordés individuellement (L1ₐ, R1ₐ, L1_{d} ; L2ₐ, R2ₐ, L2_{d}, LNₐ, RNₐ, LN_{d}) au dispositif d'aération central (10, K1, 12, K2, K3, 14) ; et
c) des moyens (figure 2) qui sont réalisés avec possibilité de réglage indépendant et individuel, pour chaque réacteur (1, 2 ... N) des paramètres de processus qui déterminent le métabolisme bactérien et
c.1) présente à cet effet une boucle de contournement servant de dérivation (K3, 14 ; L20, R22 ; L32, R34, R28, L24, R30, L31 ; R26, L25, L14, V16, R18) et/ou servant de circuit de circulation d'air (L20, R22, L32, R34, R28, L24, R30, L31 ; R26, L25, L14, V16, R18) propre au réacteur.

2. Installation de production de compost selon la revendication 1, dans laquelle le système d'aération central (10, K1, 12, K2, K3, 14) présente un dispositif de conditionnement d'air en circulation (10) pour le conditionnement de la température, de l'humidité et/ou de la composition du gaz.

3. Installation de production de compost selon la revendication 2, dans lequel le dispositif de conditionnement d'air en circulation (10) comprend des moyens pour la séparation du condensat, la récupération de la chaleur, 1 a récupération des matières odorantes et/ou le lavage des substances à problème transportées par l'air.

4. Installation de production de compost selon une des revendications précédentes, comprenant des conduites (L1, L2, LN) pour l'amenée et le départ de courants partiels partant du dispositif de circulation d'air central et entrant dans ce dispositif, en direction et en provenance des réacteurs séparés (1, 2 ... N).

5. Installation de production de compost selon une des revendications précédentes, comprenant des moyens de commande pour le réglage individuel et à la demande de la température, de l'humidité et/ou de la composition gazeuse de l'air de processus en tant que courant partiel du dispositif de circulation d'air pour chaque réacteur (1, 2 ... N).

6. Installation de production de compost selon une des revendications précédentes, comprenant un système de circulation d'air (Figure 2) qui est propre à au moins un ou plusieurs des réacteurs (1, 2 ... N), de préférence propre à chacun de tous les réacteurs, et qui peut être raccordé sélectivement au système de circulation d'air central (10, K1, 12, K2, K3, 14), de préférence au moyen de vannes de réglage (R1 à RN).

7. Installation de production de compost selon une des revendications précédentes, dans laquelle chacun des réacteurs (1 à N) dispose d'une injection d'air neuf (L11, R12) réglable qui lui est propre.

8. Installation de production de compost selon une des revendications précédentes, dans laquelle les débits d'air usé qui correspondent à l'apport d'air neuf peuvent être évacués en passant par le système de circulation d'air central (10, K1, 12, K2, K3, 14).

9. Installation de production de compost selon une des revendications précédentes, comprenant des moyens de commande qui commandent les courants partiels de tous les réacteurs raccordés ou raccordables (1, 2 ... N) dans un rapport relatif au volume total de la préparation d'air centrale capable de garantir un conditionnement sans problème de l'air mis en circulation.

10. Installation de production de compost selon une des revendications précédentes, dans laquelle les unités qui commandent les paramètres déterminant le processus, en particulier le dispositif de conditionnement de l'air mis en circulation (10), tous les ventilateurs et toutes les vannes de réglage peuvent être commandés manuellement ou avec assistance par ordinateur.
